# EUROPEAN PATENT APPLICATION

(11) **EP 2 674 743 A2**
(43) Date of publication of application: **18.12.2013**
(21) Application number: 13171209.3
(22) Date of filing: 10.06.2013
(51) Int. Cl.: G01N 3/08

(54) **Compression testing device**

(30) Priority: 13.06.2012 TW 101121013
(71) Applicant: Chang, Sheng-Nan, 80457 Kaohsiung City (TW); Chang, Sheng-Chih, 80457 Kaohsiung City (TW)
(72) Inventor: Chang, Sheng-Nan, 80457 Taiwan (TW); Chang, Sheng-Chih, 80457 Taiwan (TW); Chen, Quan-Lin, 80457 Taiwan (TW); Wang, Chao-Chieh, 80457 Taiwan (TW); Chang, Shun-Fu, 80457 Taiwan (TW)
(74) Representative: Fleuchaus, Andrea

(57) **Abstract**

A compression testing device includes a receiving unit (3) and a pressing unit (4) movable relative to the receiving unit (3). The receiving unit (3) includes an outer housing (5), a sleeve (6) inserted removably into the outer housing (5), and a liquid supplying mechanism (7). The liquid supplying mechanism (7) is operable to force a culture medium to flow through the outer housing (5) and the sleeve (6). A specimen unit (B) is disposed removably within the outer housing (5). Due to the design of the liquid supplying mechanism (7), a compression test can be performed on the specimen unit (B), and cells can be cultured on the specimen unit (B). In this manner, relationship and change between the specimen unit (B) and the cells can be observed in a real life simulating condition.

## Description

This invention relates to a testing device, and more particularly to a compression testing device applicable to a medical research.

Utilization of an artificial implant on a human bone is commonly seen in an artificial implant surgery or a surgery for interconnecting human bones. In the case of artificial implant surgery, the artificial implant is used as a tooth root, and is implanted into a bone. After implanted into the bone, the artificial implant must have an ability to undergo a strong chewing force. As a result, compression test and fatigue test are required for the artificial implant to ensure the implant quality.

In a dental animal experiment research (e.g., see Sato R, et al., Clin Oral Implants Res. 2011, 12, 1372-1378), an artificial implant is implanted into an animal bone for animal experiment, and a portion of the animal bone implanted with the artificial implant is cut to observe cell adhesion and biocompatibilty thereof. However, the above experiment cannot control force, times, and frequency. That is, the test cannot be conducted in a real life simulating condition.

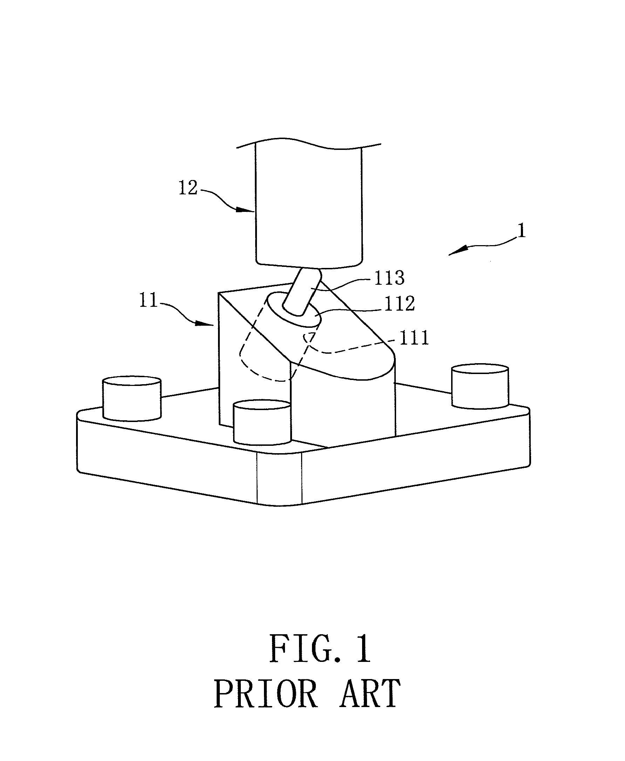

Referring to Fig. 1, a conventional testing device 1 is used to test an artificial implant, and includes a base 11 and a pressing member 12. The base 11 has a receiving portion 111. A supporting member 112 (e.g., made of epoxy resin) is inserted removably into the receiving portion 111. An artificial implant 113 is secured to the supporting member 112, and extends outwardly from the base 11. The pressing member 12 is movable to strike the artificial implant 113 for performing various tests.

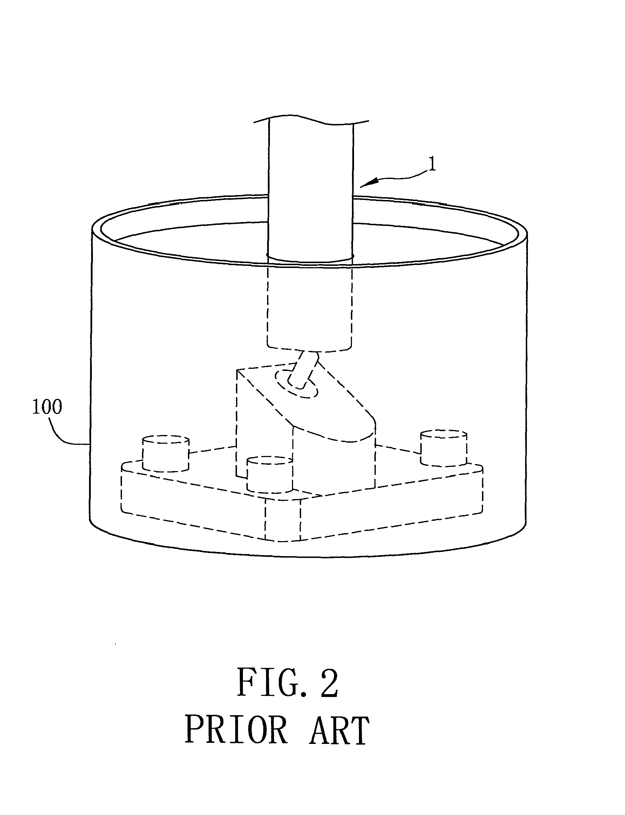

With further reference to Fig. 2, the testing device 1 may be immersed into a box 100 receiving culture medium. However, a large amount of culture medium is required. This increases the risk of cultivation contamination, and cannot immerse a specified portion of the testing device 1 in the culture medium, so that a real life simulating environment cannot be achieved.

In the case of biomaterial, in a research for biomaterial, such as chitosan, a dynamic test for biomaterial is conducted by a testing machine at a room temperature. After test, the biomaterial is placed into a culture dish and is cultivated together with cells to perform a cell adhesion and biocompatibilty experiment. Such an research is disclosed in, e.g., Liu C, et al., Biomaterials, 2012, 33, 1052-1064. In this research, a biomaterial made of polyurethane is subjected to a dynamic test, and subsequently is placed into and cultivated in a culture dish that receives cells.

Although various testing results of the biomaterial or artificial implant can be obtained from the above tests, when an artificial implant is implanted into a human bone, it comes into contact with gum cells. That is to say, in an actual physiological status, both the artificial implant and bioactive tissue are compressed, so that reaction of the the bioactive tissue occurs. As a result, the above tests cannot simulate an actual physiological status.

In an example of Orthopedics, e.g., disclosed in Miyamoto K, et al., Spine J. 2006, 6, 692-703, and Hartman RA, et al., J Biomech. 2012, 45, 382-385, which is a search of just placing a bioactive tissue into a cavity, and is compressed. Implantation of a bioactive tissue into a biomaterial or an artificial implant for compression test is not found in this paper.

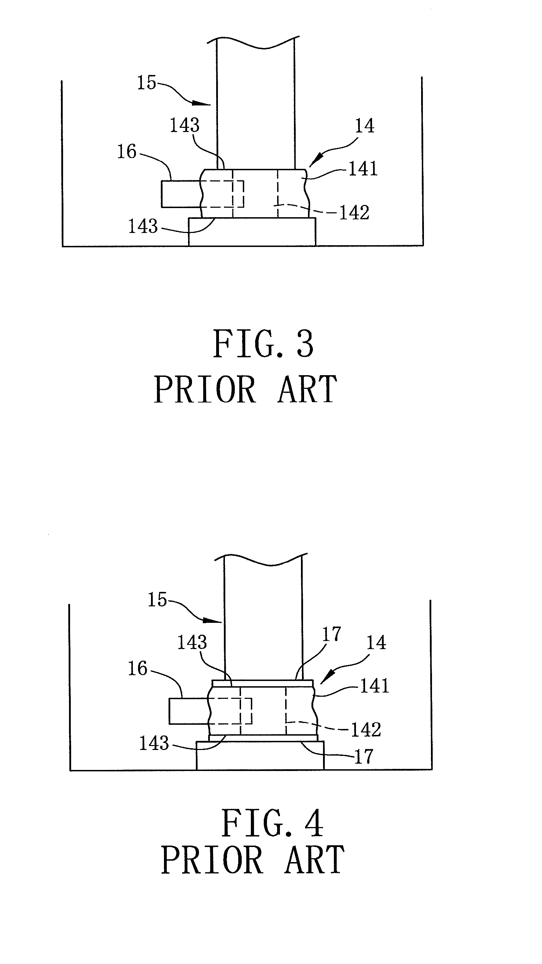

Referring to Fig. 3, a bone section 14 is tested. The bone section 14 includes a bone portion 141 and a marrow portion 142, and is immersed into culture medium to maintain bioactivity of cells. However, during test, since the bone section 14 is clamped in a solid compression device 15 made of stainless steel, nutrient of the culture medium cannot access to top and bottom surfaces 143 of the bone section 14. If a dental implant 16 is implanted into a lateral side of the bone section 14, it is impossible for the compression device 15 to perform a compression test on the dental implant 16. Furthermore, a research for testing cell adhesion and biocompatibilty between the dental implant 16 and the cells of the bone portion 141 and the marrow portion 142 cannot be performed by the compression device 15. Referring to Fig. 4, although two porous biomaterials 17 may be disposed respectively on top and bottom sides of the bone section 14 to allow for access of the culture medium to the top and bottom surfaces 143 for impregnating the bone section 14, it is still impossible to perform a test on the laterally extending dental implant 16. Moreover, the culture medium cannot flow in a circulating manner, which does not meet an actual physiological status.

The object of this invention is to provide a compression testing device that can overcome the aforesaid drawbacks associated with the prior art.

According to this invention, a compression testing device includes a receiving unit and a pressing unit movable relative to the receiving unit. The receiving unit includes an outer housing, a sleeve inserted removably into the outer housing, and a liquid supplying mechanism. The liquid supplying mechanism is operable to force a culture medium to flow through the outer housing and the sleeve. A specimen unit is disposed removably within the outer housing. Due to the design of the liquid supplying mechanism, a compression test can be performed on the specimen unit, and cells can be cultured on the specimen unit. In this manner, relationship and change between the specimen unit and the cells can be observed in a real life simulating condition.

These and other features and advantages of this invention will become apparent in the following detailed description of the preferred embodiments of this invention, with reference to the accompanying drawings, in which:
Fig. 1 is a perspective view of a conventional testing device;
Fig. 2 is a perspective view illustrating that the conventional testing device is placed into a box receiving culture medium;
Figs. 3 and 4 are schematic views illustrating a test for a bone section;
Fig. 5 is a schematic view of the first preferred embodiment of a compression testing device according to this invention;
Fig. 6 is an exploded perspective view of the first preferred embodiment;
Fig. 7 is a sectional view of the first preferred embodiment;
Fig. 8 is a schematic view illustrating that the first preferred embodiment is usable with a circulation device;
Fig. 9 illustrates a modification to a receiving unit of the first preferred embodiment;
Fig. 10 is a schematic view of the second preferred embodiment of a compression testing device according to this invention;
Fig. 11 is a cutaway perspective view of the second preferred embodiment;
Fig. 12 is a schematic view illustrating that the second preferred embodiment is usable with a circulation device;
Figs. 13 to 16 are sectional views illustrating different structures of a specimen unit of the second preferred embodiment;
Fig. 17 is an exploded perspective view of the third preferred embodiment of a compression testing device according to this invention;
Fig. 18 is a sectional view of the third preferred embodiment;
Fig. 19 is a cutaway perspective view of the third preferred embodiment;
Fig. 20 is a perspective view of a pressing unit of the third preferred embodiment; and
Fig. 21 is a sectional view of the pressing unit of the third preferred embodiment.

Before the present invention is described in greater detail in connection with the preferred embodiments, it should be noted that similar elements and structures are designated by like reference numerals throughout the entire disclosure.

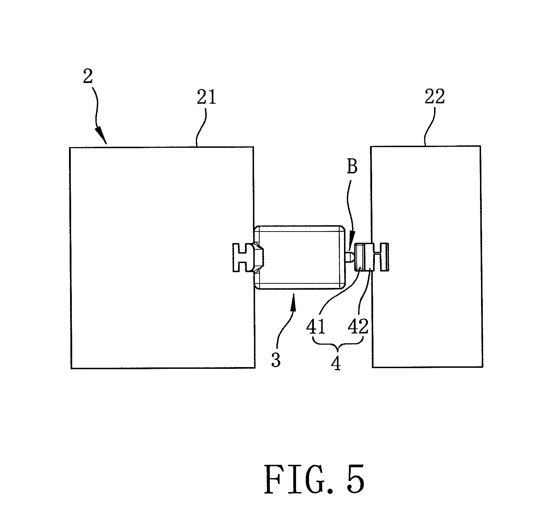

Referring to Fig. 5, the first preferred embodiment of a compression testing device according to this invention is disposed removably to a testing system 2 for testing a specimen unit (B). The testing system 2 includes a driven end 21 and a driving end 22 disposed in front of the driven end 21 and operable to move relative to the driven end 21. The compression testing device includes a receiving unit 3 disposed on the driven end 21 of the testing system 2, and a pressing unit 4 mounted to the driving end 22 of the testing system 2 such that the driving end 22 of the testing system 2 is operable to move relative to the receiving unit 3. The pressing unit 4 includes a pressing member 41 and a front positioning member 42 that is connected to said pressing member 41 and that is disposed removably on the driving end 22 of the testing system 2. Since the testing system 2 is not pertinent to this invention, the detailed structure thereof will not be described.

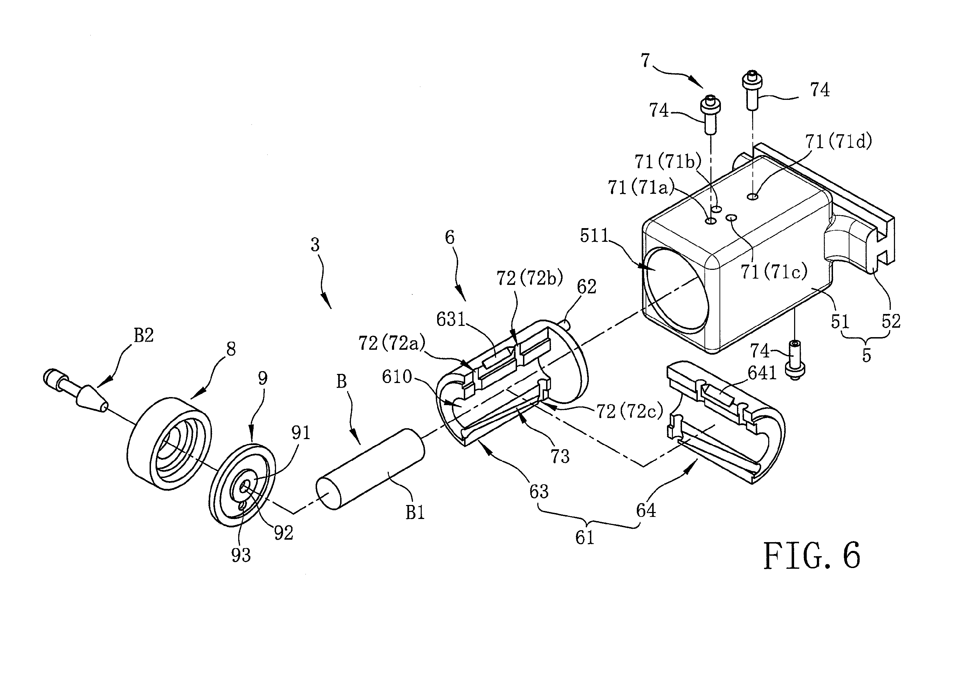

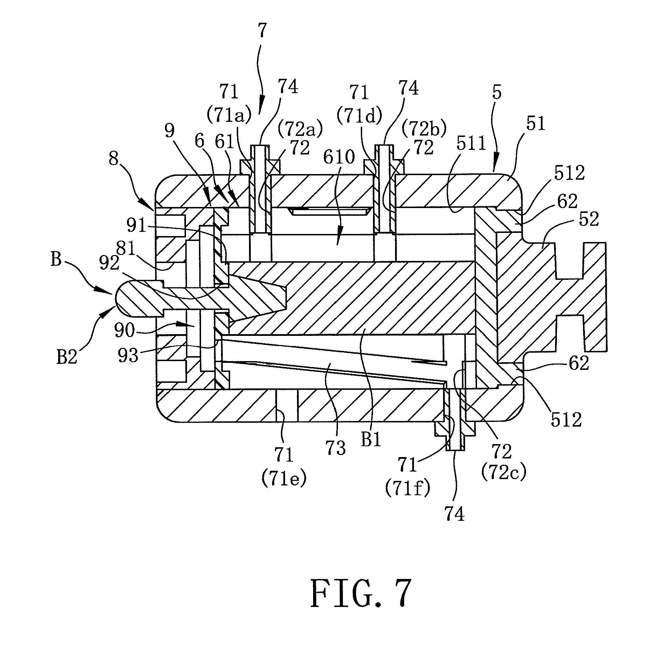

With additional reference to Figs. 6 and 7, the receiving unit 3 includes an outer housing 5, a sleeve 6 inserted removably into the outer housing 5, a liquid supplying mechanism 7 for forcing a culture medium to flow through the outer housing 5 and the sleeve 6, a seal cap 8 disposed removably in and sealing an end of the outer housing 5, and a seal gasket 9 clamped between the seal cap 8 and the sleeve 6.

The outer housing 5 includes a housing body 51 defining a sleeve-receiving space 511, and a rear positioning member 52 mounted to the driven end 21 of the testing system 2. The sleeve 6 is inserted removably into the sleeve-receiving space 511. The outer housing 5 includes a plurality of through holes 512 (see Fig. 7) formed therethrough, so that the sleeve 6 can be ejected out of the sleeve-receiving space 511. The pressing member 41 is movable toward or away from the housing body 51.

The sleeve 6 includes a sleeve body 61 defining an accommodating space 610, and a plurality of positioning stubs 62 extending from the sleeve body 61 and inserted respectively into the through holes 512 in the outer housing 5 for positioning the sleeve 6 relative to the outer housing 5. In this embodiment, since the number of either the through holes 512 or the positioning stubs 62 is two, the sleeve 6 can be ejected conveniently and easily out of the sleeve-receiving space 511. The number of the through holes 512 and the positioning stubs 62, however, may be changed. The cross-section of each of the sleeve-receiving space 511 and the sleeve body 61 is but not limited to circular.

The sleeve body 61 has a left half 63 and a right half 64 that are interconnected removably along a horizontal direction and that has interengaging surfaces. The interengaging surfaces of the left and right halves 63, 64 are configured as convex-and-concave structures that are complementary to each other. Each of the left and right halves 63, 64 has a concave surface 631, 641 at a top end thereof. The concave surfaces 631, 641 of the left and right halves 63, 64 face toward each other, so as to permit fingers of a user to contact the concave surfaces 631, 641 for pushing the left and right halves 63, 64 away from each other. Alternatively, the sleeve 6 may be formed as one piece.

The seal cap 8 has a first hole 81 formed axially therethrough. The seal gasket 9 has a central projection 91 plugged sealingly into an end of the accommodating space 610 in the sleeve 6, and has a second hole 92 extending through the central projection 91 and aligned with the first hole 81 in the seal cap 8 such that a portion of the specimen unit (B) extends through the first and second holes 81, 92, and a third hole 93 formed axially therethrough and spaced apart from the central projection 91. The seal gasket 9 cooperates with the seal cap 8 to define a flow space 90 therebetween. In this embodiment, the accommodating space 610 and the central projection 91 are cylindrical.

The liquid supplying mechanism 7 includes a plurality of openings 71 formed radially through a wall of the housing body 51, a plurality of first passages 72 formed radially through the sleeve body 61 and in fluid communication with the openings 71, respectively, a second passage 73 extending along a direction inclined relative to an axial direction of the sleeve body 61, and a plurality of connecting tubes 74 extending respectively through the openings 71 in the outer housing 5. In this embodiment, each of the first passages 72, the second passage 73, and the accommodating space 610 is defined between the left and right halves 63, 64 for convenience of cleaning, and the positioning stubs 62 are formed on the left half 63.

In this embodiment, the number of the openings 71 is six. Four openings 71 are formed in a top end portion of the outer housing 51, and the remaining openings 71 are formed in a bottom end portion of the housing body 51. Alternatively, the openings 71 may be formed in the left and right side portions of the housing body 51. In this embodiment, the number of the first passages 72 is three. For convenience of illustration, the six openings 71 are designated respectively as 71a, 71b, 71c, 71d, 71e, and 71f, and the three first passages 72 are designated respectively as 72a, 72b, and 72c. In this embodiment, the second passage 73 is in fluid communication with the third hole 93 and the first passage 72c. The number and positions of the openings 71 may be changed according to the structure of the sleeve 6.

The specimen unit (B) is disposed removably within the accommodating space 610. In this embodiment, the specimen unit (B) includes a supporting member (B1) and an artificial implant (B2) inserted removably into the supporting member (B1).

With particular reference to Figs. 5 and 7, the compression testing device is used to compress the artificial implant (B2). In case that the supporting member (B1) is made of an expoxy resin or a biomaterial, a fatigue test can be performed on the artificial implant (B2) for testing both the fatigue life of the artificial implant in a predetermined environment and the connection strength of the artificial implant (B2) and the supporting member (B1). In such tests, the connecting tubes 74 are not used, and may be omitted from the liquid supplying mechanism 7.

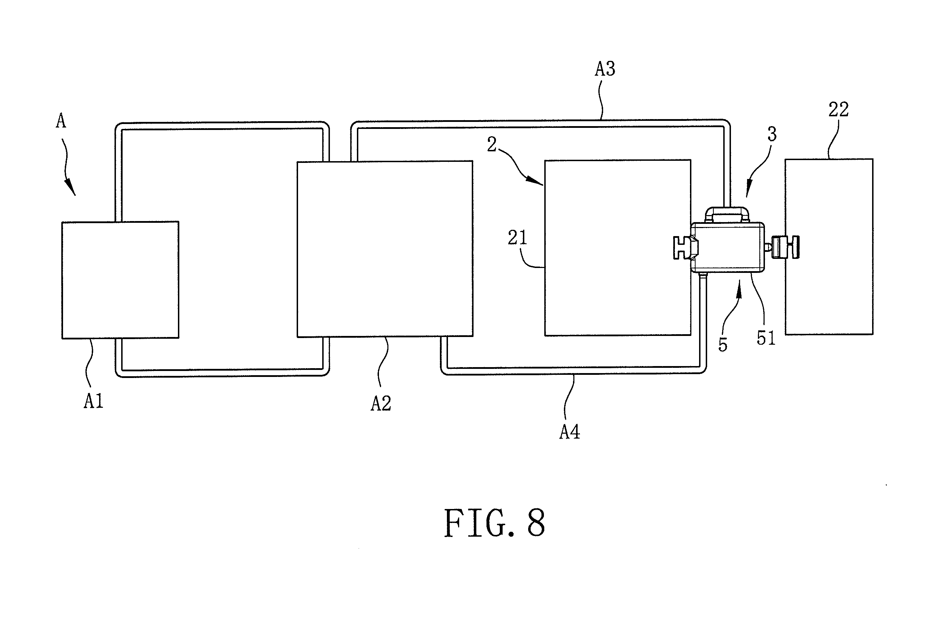

With particular reference to Figs. 7 and 8, in case that the supporting member (B1) is made of a living tissue or a porous biomaterial and cells are cultivated within the pores in the biomaterial, the compression testing device needs to cooperate with a circulation device (A). According to chemical composition, the biomaterial is cataloged into materials of ceramic, metal, polymer, and a composite material. According to reaction of the bone organism, the biomaterial are cataloged into biotolerant, bioinert, bioactive, and bioresorbable materials.

With particular reference to Fig. 8, the circulation device (A) includes a liquid collecting container (A1), a pump (A2) in fluid communication with the liquid collecting container (A1), a liquid feeding tube (A3) in fluid communication with the pump (A2) and the openings 71 in the housing body 51, and a liquid discharging tube (A4) in fluid communication with the pump (A2) and the openings 71 in the housing body 51. The liquid feeding tube (A3) and the liquid discharging tube (A4) are peristaltic tubes. Since structures and operations of the peristaltic tubes are known in the art, further description thereof will not be described. The liquid feeding tube (A3) and the liquid discharging tube (A4) are in fluid communication with the openings 71 via the connecting tubes 74, and must be designed according to the number and shape of the openings 71.

With particular reference to Figs. 7 and 8, during operation of the pump (A2), the culture medium is delivered from the liquid collecting container (A1) into the openings 71 through the liquid feeding tube (A3), and flows into the accommodating space 610 through the first passages 72. In this embodiment, the liquid feeding tube (A3) is in fluid communication with the first passages 72a, 72b to allow the culture medium to flow uniformly and quickly into the accommodating space 610. The culture medium flows slowly within supporting member (B1) to provide enough nutrient to the cells in the pores in the living tissue or biomaterial. Surplus culture medium flows into the flow space 90 through the second passage 92, and then into the liquid collecting container (A1) through a flow path including the third holes 93, the second passage 73, the first passage 72c, and the liquid discharging tube (A4) through operation of the pump (A2).

With particular reference to Fig. 7, a bottom end of the connecting tube 74 extends into the corresponding first passage 72 so as to prevent flow of the culture medium in a space between the housing body 51 and the sleeve body 61. With particular reference to Fig. 6, the seal gasket 9 is not an O-ring, and has a greater area so as to establish a liquid-tight seal among the left and right halves 63, 64 and the seal cap 8.

A screw (not shown) is threaded into the first passage 72c and the opening 71f for sealing the first passage 72c and the opening 71f before the culture medium is fed into the outer housing 5, and subsequently is removed from the first passage 72c and the opening 71f after the supporting member (B1) is immersed within the culture medium for a sufficient time period. Upon removal of the screw, the corresponding connecting tube 74 is inserted through the opening 71f. Due to the design of the two positioning stubs 62, rotation of the sleeve 6 relative to the housing body 51 can be prevented during the compressing or fatigue test. By simply pushing the positioning stubs 62, the sleeve 6 can be ejected out of the accommodating space 610.

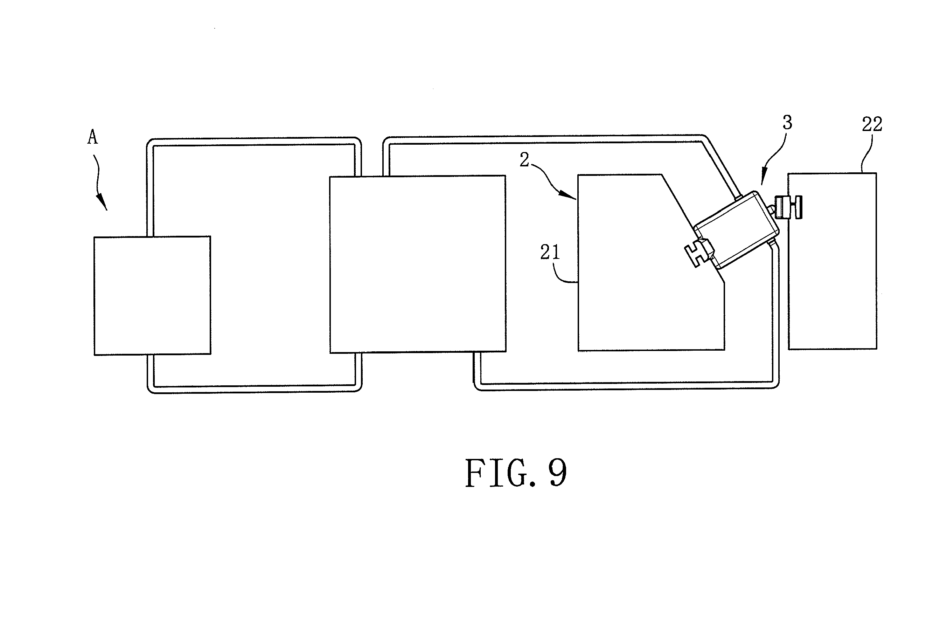

It should be noted that, the compression testing device may be put into a cell-cultivating box (not shown) for conducting research in a real life simulating condition. Or, the compression testing device is put in a room-temperature environment. In this case, the receiving unit 8 needs to be mounted with a thermostat and a carbon dioxide separation device that are not shown in the drawings. The receiving unit 3 may be disposed between the driven end 21 and the driving end 22 of the testing system 2 in a horizontal direction, as shown in Fig. 5, in a direction forming an angle of 30 degrees with respect to a horizontal line (not shown), as shown in Fig. 9, or in a vertical direction.

Through the above design, in case that the supporting member (B1) is made of an expoxy resin or other material capable of securing the artificial implant (B2), such as bone cement or bone powder, a fatigue test can be conducted on an assembly of the artificial implant (B2) and the supporting member (B1). In case that the supporting member (B1) is made of a biomaterial, the compression testing device can be used to test cell adhesion and biocompatibility between the artificial implant (B2) and the biomaterial. In case that the supporting member (B1) is made of a living tissue or a biomaterial cultivated with cells, by use of the liquid supplying mechanism 7 and the circulation device (A), survival of the living tissue or cells can be maintained, and the cell adhesion and biocompatibility of the living tissue or cells with respect to the biomaterial can be realized. That is, real life simulating research equipment is achieved.

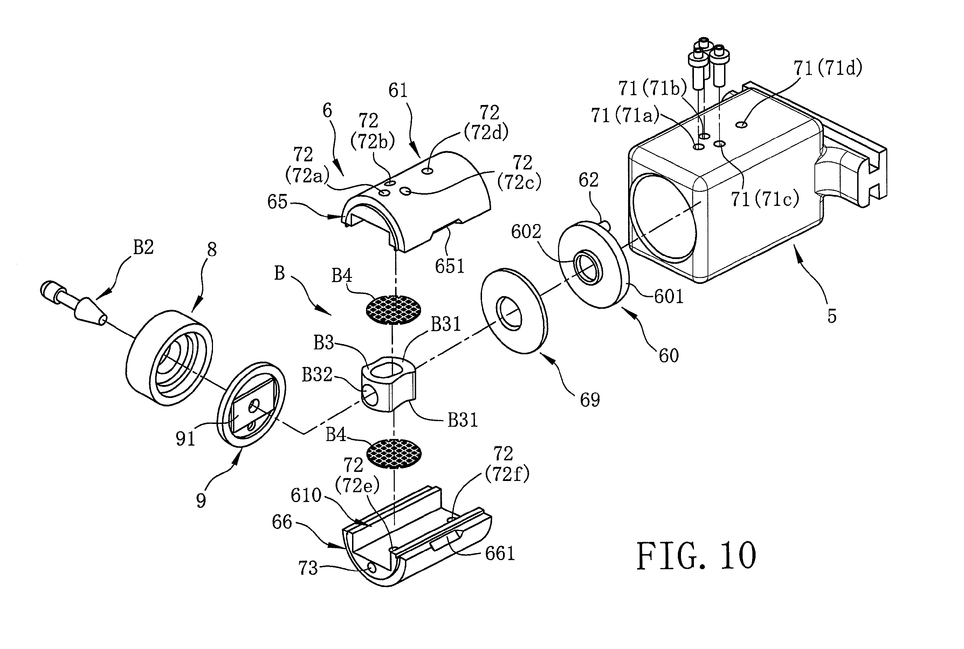

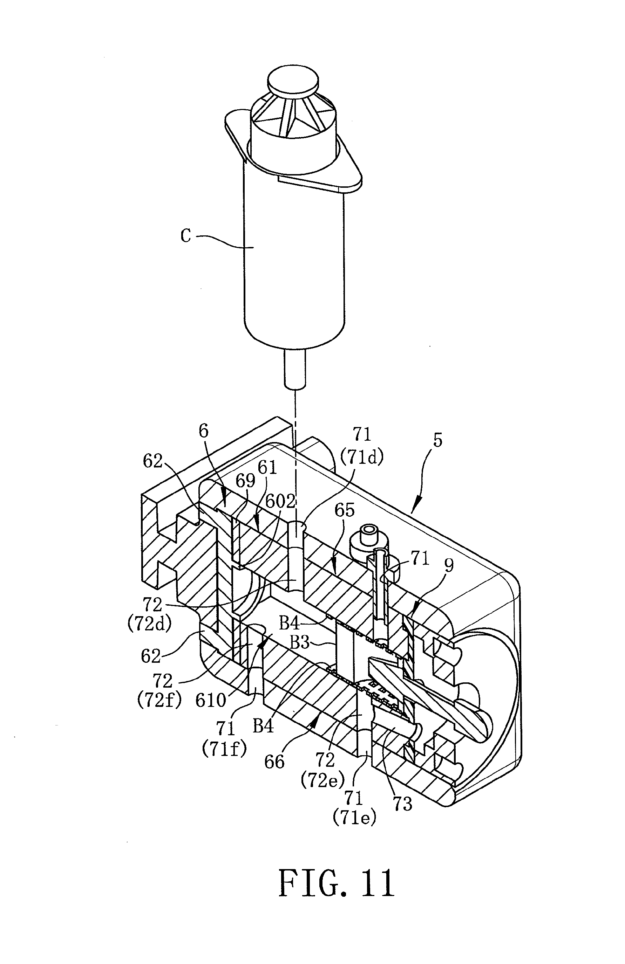

Figs. 10 and 11 show the second preferred embodiment of a compression testing device according to this invention, which is similar in construction to the first preferred embodiment. Unlike the first preferred embodiment, the sleeve body 61 has an upper half 65, a lower half 66 connected removably to the upper half 65 along a vertical direction, a base portion 60 connected removably to the rear ends of the upper and lower halves 65, 66, and a vertical seal gasket 69 clamped between the base portion 60 and the upper half 65 and between the base portion 60 and lower half 66. The upper and lower halves 65, 66 have interengaging surfaces configured as convex-and-concave structure that are complementary to each other. Each of the upper and lower halves 65, 66 has a concave surface 651, 661. The concave surfaces 651, 661 of the upper and lower halves 65, 66 face toward each other, so as to permit the fingers of the user to contact the concave surfaces 651, 661 for pushing the upper and lower halves 65, 66 away from each other. In this embodiment, the number of the first passages 72 is six. Four of the first passages 72 are formed in the upper halve 65, while the remaining first passages 72 are formed in the lower halve 66. The second passage 73 is formed in the lower half 66. The base portion 60 has a base wall 601 and an annular flange 602 extending from the base wall 601 into the accommodating space 610 for positioning the specimen unit (B) in the accommodating space 601. The positioning stubs 62 is formed on the base portion 60. In this embodiment, the central projection 91 of the seal gasket 9 and the cross-section of the accommodating space 610 are rectangular. Alternatively, the accommodating space 610 and the cross-section of the accommodating space 610 may be cylindrical, as shown in Fig. 6, or of other shape. Or, the base portion 60 may be formed with the upper and lower halves 65, 66, so that the seal gasket 69 can be omitted.

With particular reference to Fig. 10, in this embodiment, the specimen unit (B) includes a bioactive tissue section (B3) obtained from a living tissue, two auxiliary materials (B4) disposed respectively on upper and lower sides of the segment (B3), and an artificial implant (B2). Each of the auxiliary materials (B4) is configured as a porous biomaterial having pores capable of receiving culture medium therein. Alternatively, each of the auxiliary materials (B4) may be added with injury repair factors, or is configured as another tissue section of the living tissue. It should be noted that, the tissue section (B3) may be taken from a bone having an irregular shape, which is cut to form flat top and bottom surfaces (B31). The auxiliary materials (B4) cover respectively and entirely and are in intimate contact with the top and bottom surfaces (B31). In this embodiment, the area of each of the auxiliary materials (B4) is greater than that of a corresponding one of the top and bottom surfaces (B31). Alternatively, the area of each of the auxiliary materials (B4) may have an outline corresponding to that of the corresponding one of the top and bottom surfaces (B31).

With particular reference to Figs. 10 and 11, during assembly, the tissue section (B3) is first drilled to form a hole (B32). Next, the artificial implant (B2) is put into the hole (B32), and is clamped between the upper and lower halves 65, 66, followed by injecting bone cement or a plastic material from a syringe (C) into the accommodating space 610 through the opening 71d until a space located between the artificial implant (B2) and an assembly of the upper and lower halves 65, 66 is filled with the bone cement or the plastic material, so as to fix the tissue section (B3) in the accommodating space 610. During the process for injecting the bone cement or the plastic material, a bolt (not shown) is used for closing the opening 71f and the first passage 72f to prevent outflow of the bone cement or the plastic material, and is removed after solidification of the bone cement or the plastic material. The auxiliary materials (B4) can prevent permeation of the bone cement or the plastic material into the top and bottom surfaces (B31) of the tissue section (B3).

After the tissue section (B3) is assembled into the compression testing device, a compression test can be performed on the artificial implant (B2). During the compression test, the culture medium is also provided by the circulation device (A) to maintain the bioactivity of the tissue section (B3). The culture medium can be selectively fed through one or two of the openings 71a, 71b, and 71c to flow into the liquid discharging tube (A4) through a flow path including the upper auxiliary material (B4), the tissue section (B3), and the first passage 72e and the the opening 71e in the lower half 66 so as to allow for circulation of the culture medium. The openings 71a, 71b, and 71c may be used for depressurization due to the fact that no culture medium is introduced therethrough. This facilitates smooth flow of the culture medium.

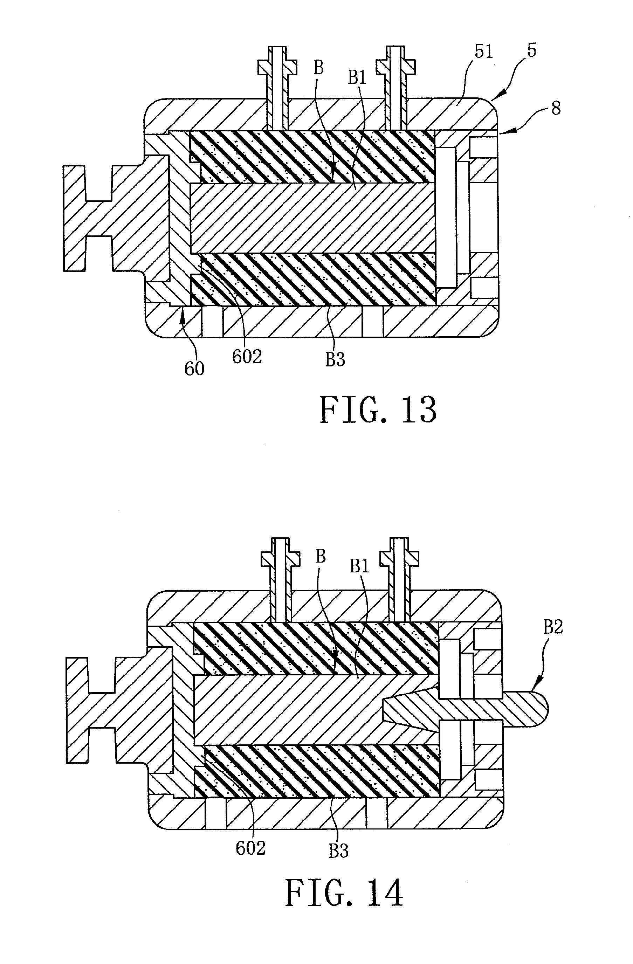

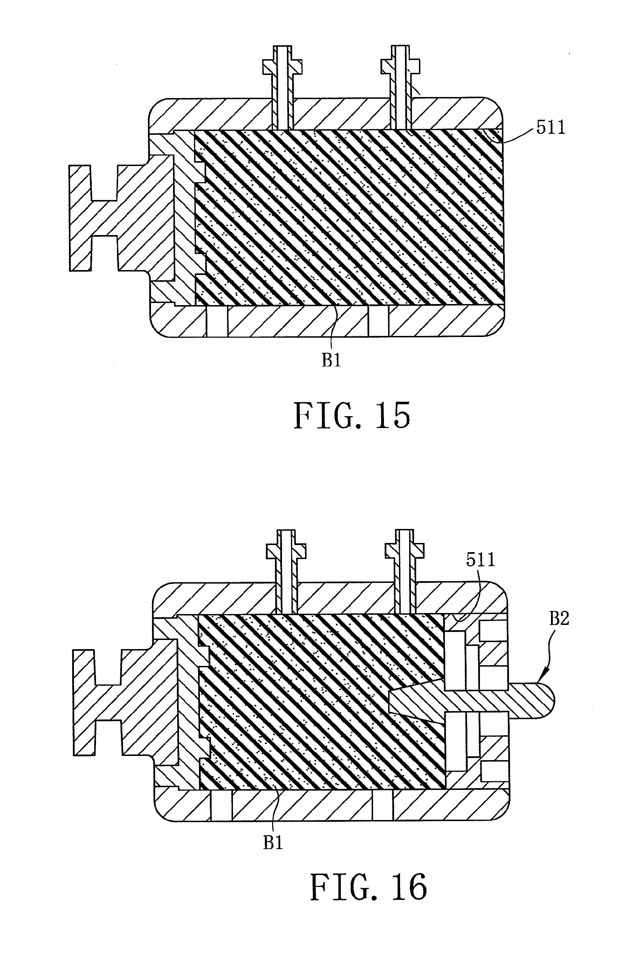

It should be noted that, since the upper and lower halves 65, 66 are assembled removably to the base portion 60, in actual use, with further reference to Fig. 13, the sleeve 6 may include only the base portion 60 that is disposed in the outer housing 5. In this case, the specimen unit (B) may be any of the following structures:
(a) As shown in Fig. 13, the supporting member (B1) is positioned by the annular flange 602, and is made of a porous biomaterial cultivated with cells. The auxiliary material (B3) is made of another biomaterial, surrounds the supporting member (B1), and may be added with a medicine required for the test;
(b) Also as shown in Fig. 13, the supporting member (B1) is positioned by the annular flange 602, and is made of a ceramic or metallic biomaterial subjected to surface treatment. The auxiliary material (B3) is made of another biomaterial, surrounds the supporting member (B1), and is cultivated with cells that may be added with a medicine required for the test;
(c) As shown in Fig. 14, the supporting member (B1) is positioned by the annular flange 602, and is made of a porous biomaterial cultivated with cells. The artificial implant (B2) is secured to the supporting member (B1). The auxiliary material (B3) is made of another biomaterial, surrounds the supporting member (B1), and may be added with a medicine required for the test;
(d) As shown in Fig. 15, the supporting member (B1) fills the sleeve-receiving space 511, and is made of a porous biomaterial cultivated with cells; and
(e) As shown in Fig. 16, the supporting member (B1) fills the sleeve-receiving space 511, and is made of a porous biomaterial cultivated with cells. The artificial implant (B2) is secured to the supporting member (B1).

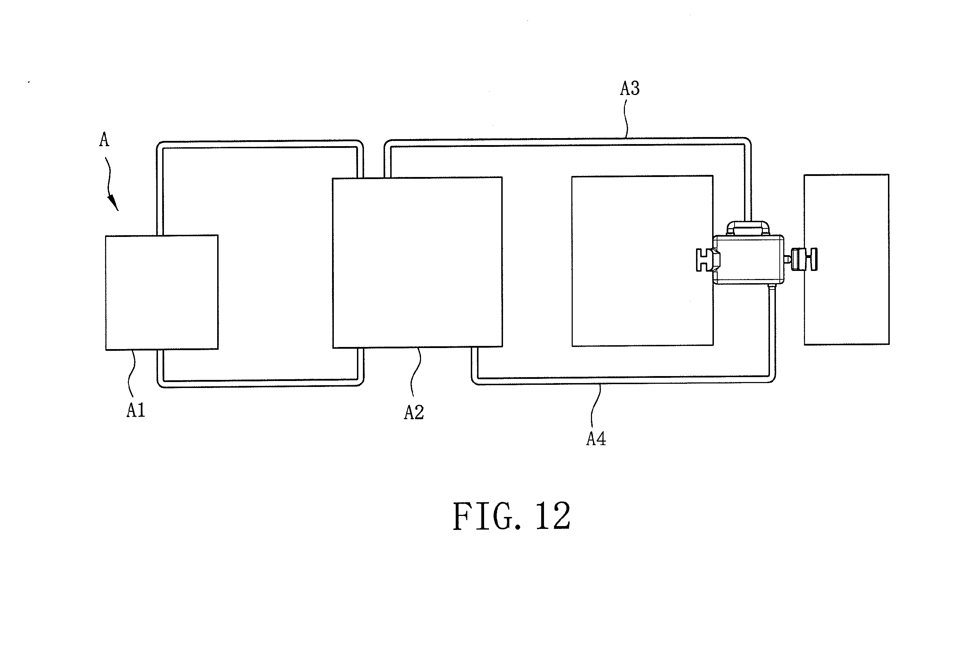

The porous material may be foamed polyurethane or meshed structure. When the specimen unit (B) has structure (a) or (d), compression test and fatigue test can be performed on the supporting member (B1). When the specimen unit (B) has structure (d) or (e), compression test and fatigue test can be performed on the artificial implant (B2). When the specimen unit (B) has structure (b), and when the seal cap 8 is removed, compression test and fatigue test can be performed on the supporting member (B1) and the auxiliary material (B3). Through the above tests, the characteristics of the biomaterial for making the supporting member (B1), as well as the cell adhesion and biocompatibility can be observed. When the specimen unit (B) has structure (a), (b), or (c), effect of the medicine disposed within the auxiliary material (B3) on the supporting member (B1) can be observed. Of course, the circulation device (A) (see Fig. 12) is required to enable the above tests.

It should be noted that, since the auxiliary material (B3) has pores, the culture medium can access to the supporting member (B1), and the pores form spaces for allowing deformation of the supporting member (B1) when the supporting member (B1) is compressed.

With the above design, compression test or fatigue test can be performed on the specimen unit (B) of different structures, and relationship between the artificial implant (B2) and the tissue section (B3) (such as bone density and bone repair) can be researched. In addition, by selecting the specimen unit (B) of different structures, cell adhesion and biocompatibilty search can be achieved. Furthermore, this embodiment can be used to test the supporting member (B1) and the artificial implant, as the first preferred embodiment, thereby increasing the applicable range.

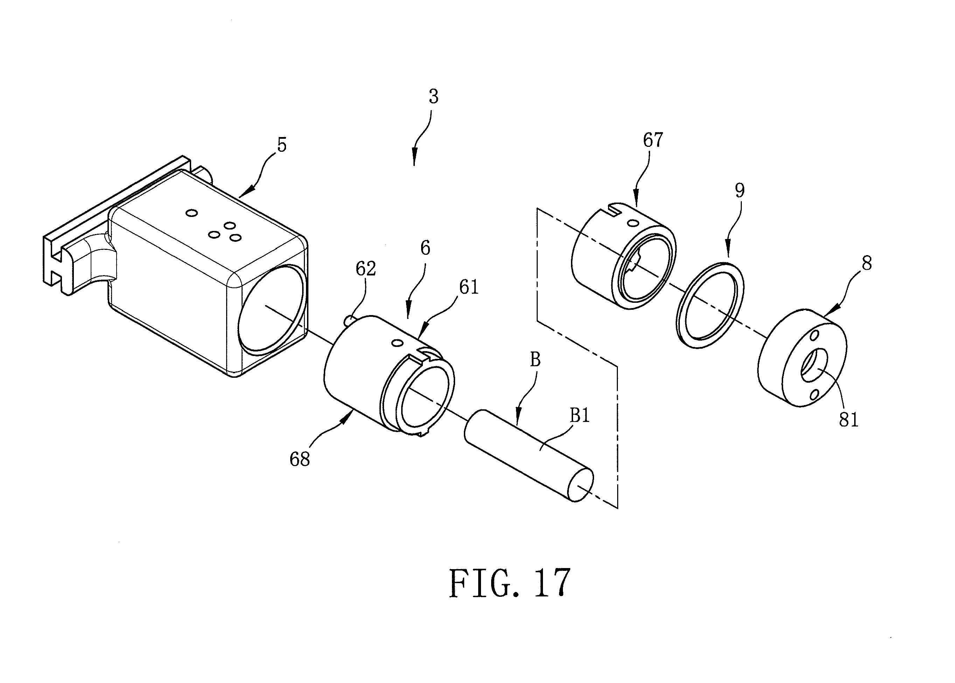

Figs. 17, 18, and 19 show the third preferred embodiment of a compression testing device according to this invention, which is similar in construction to the first preferred embodiment. Unlike the first preferred embodiment, the sleeve body 61 has a front ring portion 67 and a rear ring portion 68 disposed behind and connected removably to the front ring portion 67. The front and rear ring portions 67, 68 have interengaging surfaces that are configured as convex-and-concave structures and that are complementary to each other, so as to prevent flow of the culture medium out of the sleeve body 61 through a gap between the front and rear ring portions 67, 68. The first passages 80 are formed in the front and rear ring portions 67, 68.

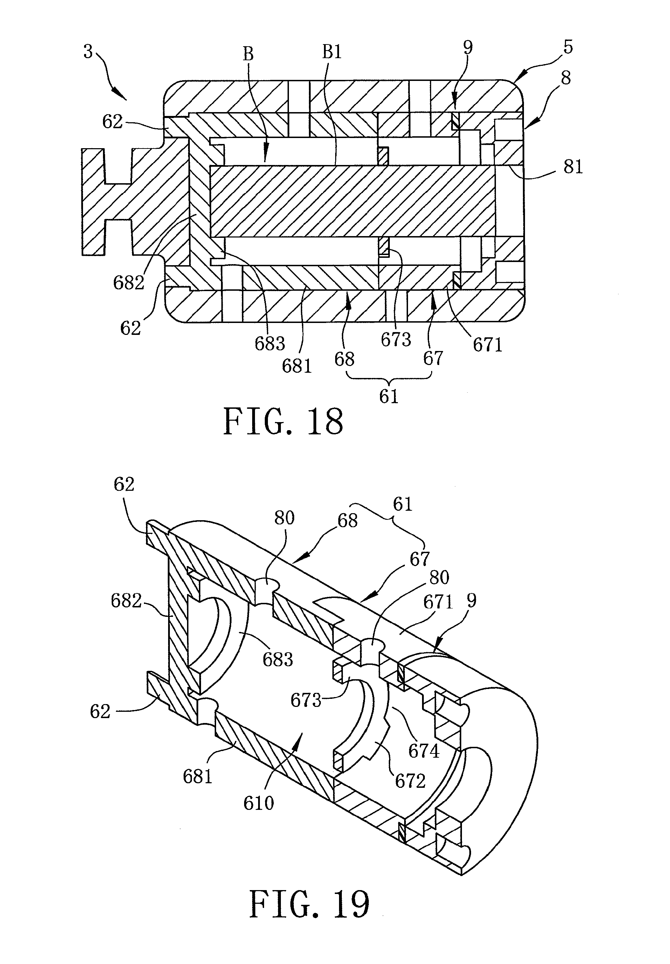

With particular reference to Figs. 18 and 19, the rear ring portion 68 has a surrounding wall 681, a rear end wall 682, and an annular flange 683 extending from the rear end wall 682 into the accommodating space 610. The positioning stubs 62 are formed on and disposed behind the rear end wall 682. The front ring portion 67 has a surrounding wall 671, a plurality of projections 672 (only one is shown in Fig. 19) extending radially and inwardly from the surrounding wall 671, and an inner ring 673 connected integrally to the projections 672 and spaced apart from the surrounding wall 671, such that any two adjacent projections 672 cooperate with the surrounding wall 671 and the inner ring 673 to define a liquid passable space 674 thereamong. The specimen unit (B) extends through the inner ring 673. In this embodiment, since the seal gasket 9 is not disposed between the front and rear ring portions 67, 68, it may be configured as an O-ring. Alternatively, the sleeve 6 may be one piece.

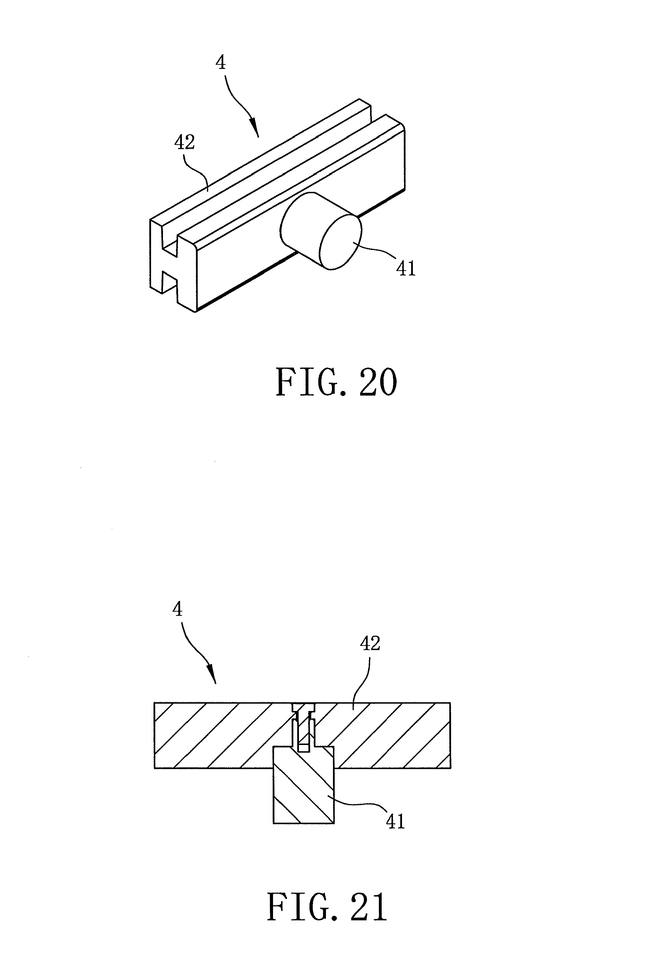

With particular reference to Figs. 17 and 18, in a situation where the specimen unit (B) includes only the supporting member (B1), the supporting member (B1) is made of a biomaterial, and can be subjected to compression test and fatigue test. The pressing member 41 of the pressing unit 41 is shown in Fig. 20, and is movable through a hole 81 in the seal cap 8 to strike the supporting member (B1). The pressing member 41 may be connected fixedly to the front positioning member 42 in a manner shown in Fig. 21. In this manner, the pressing member 41 is replaceable.

With particular reference to Figs. 18 and 20, during the compression test, an impact is applied by the pressing member 41 on the supporting member (B1) to compress the supporting member (B1) for testing compression characteristics of the biomaterial. During the fatigue test, a predetermined force is applied to compress the supporting member (B1) selected times for observing the fatigue life of the supporting member (B1). Through the compression test and the fatigue test, the material characteristics of the biomaterial for making the supporting member (B1) can be realized. If the supporting member (B1) is a bioactive tissue, or is made of a porous biomaterial cultivated with cells, to test the above test in a similar manner, the circulation device (A) (see Fig. 12) is required to realize relationship between the cells. Through cooperation between the inner ring 673 and the projections 672, the culture medium can flow smoothly through the liquid passable spaces 674 (see Fig. 19).

With particular reference to Figs. 18 and 19, an annular space is left between the supporting member (B1) and the surrounding walls 671, 681. Hence, the supporting member (B1) can be fixed in the accommodating space 610 by the inner ring 673 and the annular flange 683, so as to prevent movement of the supporting member (B1) during test. Furthermore, the annular space enables deformation of the supporting member (B1) when compressed.

With the above design, this embodiment can achieve the same effect as the first preferred embodiment, and is operable to perform compression test and fatigue test on the supporting member (B1). Furthermore, in a situation where the supporting member (B1) is cultivated with cells, a test can be conducted to observe cell adhesion and biocompatibilty between the cells and the supporting member (B1), thereby increasing the applicable range.

In view of the above, through operation of the liquid supplying mechanism 7, the culture medium can be circulated in the outer housing 5 and the sleeve 6, and the compression testing device can be used to test the supporting member (B) made of biomaterial or bioactive tissue and interaction between the artificial implant and the supporting member (B1), so as to allow the supporting member (B1) to be tested in a real life simulating condition, and so that the required culture medium may be reduced, thereby diminishing cultivation contamination.

## Claims

1. A compression testing device adapted to be mounted to a testing system (2) for testing a specimen unit (B), the testing system (2) including a driven end (21) and a driving end (22) disposed in front of said driven end (21) and operable to move relative to the driven end (21), **characterized by**:
a receiving unit (3) adapted to be disposed on the driven end (21) of the testing system (2) and including an outer housing (5), a sleeve (6) inserted removably into said outer housing (5), and a liquid supplying mechanism (7) adapted to force a culture medium to flow through said outer housing (5) and said sleeve (6), said outer housing (5) being adapted for receiving removably the specimen unit (B); and
a pressing unit (4) adapted to be mounted to the driving end (22) of the testing system (2) such that the driving end (22) of the testing system (2) is operable to move said pressing unit (4) relative to said receiving unit (3).

2. The compression testing device as claimed in Claim 1, **characterized in that**:
said outer housing (5) includes a housing body defining a sleeve-receiving space (511) therein, and a rear positioning member (52) adapted to be mounted to the driven end (21) of the testing system (2); and
said pressing unit (4) includes a pressing member (41) and a front positioning member (42) that is connected to said pressing member (41) and that is adapted to be disposed removably on the driving end (22) of the testing system (2), such that said pressing member (41) is movable toward or away from said outer housing (5).

3. The compression testing device as claimed in Claim 2, further **characterized in that**:
said outer housing (5) further includes a plurality of through holes (512) formed therethrough; and
said sleeve (6) includes a sleeve body (61) defining an accommodating space (610) adapted for receiving the specimen unit (B), and a plurality of positioning stubs (62) extending from said sleeve body (61) and inserted respectively into said through holes (512) in said outer housing (5) for positioning said sleeve (6) relative to said outer housing (5).

4. The compression testing device as claimed in Claim 3, further **characterized in that**:
said receiving unit (3) includes a seal cap (8) disposed removably in and sealing an end of said outer housing (5), and a seal gasket (9) clamped between said end of said seal cap (8) and said sleeve (6), said seal cap (8) having a first hole (81) formed axially therethrough, said seal gasket (9) having a central projection (91) plugged sealingly into an end of said accommodating space (610) in said sleeve (6) and having a second hole (92) extending through said central projection (91) and aligned with said first hole (81) in said seal cap (8) such that a portion of the specimen unit (B) extends through said first and second holes (92), and a third hole (93) formed axially therethrough and spaced apart from said central projection (91), said seal cap (8) cooperating said seal gasket (9) to define a flow space therebetween; and
said liquid supplying mechanism (7) includes a plurality of openings (71) formed radially through a wall of said outer housing (5), a plurality of first passages (72, 80) formed radially through said sleeve body (61) and in fluid communication with said openings (71), respectively, and a second passage (73) extending along a direction inclined relative to an axial direction of said sleeve body (61) and in fluid communication with said third hole (93) and one of said first passages (72, 80).

5. The compression testing device as claimed in Claim 4, further **characterized in that** said sleeve body (61) has a left half (63) and a right half (64) that are interconnected removably along a horizontal direction and that have interengaging surfaces, said interengaging surfaces being configured as convex-and-concave structures that are complementary to each other, each of said first passages (72), said second passage (73), and said accommodating space (610) being defined between said left and right halves (63, 64), said positioning stubs (62) being formed on said left half (63), each of said left and right halves (63, 64) having a concave surface (631, 641) at a top end thereof, said concave surfaces (631, 641) of said left and right halves (63, 64) facing toward each other so as to permit fingers of a user to contact said concave surfaces for pushing said left and right halves (63, 64) away from each other.

6. The compression testing device as claimed in Claim 4, further **characterized in that** said sleeve body (61) has an upper half (65), a lower half (66) connected removably to said upper half (65) along a vertical direction, a base portion (60) connected removably to an end of said upper half (65) and an end of said lower half (66), and a vertical seal gasket (69) clamped between said base portion (60) and said upper half (65) and between said base portion (60) and said lower half (66), said upper and lower halves (65, 66) having interengaging surfaces, said interengaging surfaces being configured as convex-and-concave structures that are complementary to each other, said first passages (72) being formed in said upper and lower halves (65, 66), said second passage (73) being formed in said lower half (66), said base portion (60) having a base wall (601) and an annular flange (602) extending from said base wall (601) into said accommodating space (610) and adapted for positioning the specimen unit (B) in said accommodating space (610), said positioning stubs (62) being formed on said base portion (60), each of said upper and lower halves (65, 66) having a concave surface (651, 661), said concave surfaces (651, 661) of said upper and lower halves (65, 66) facing toward each other so as to permit fingers of a user to contact said concave surfaces (651, 661) for pushing said upper and lower halves (65, 66) away from each other.

7. The compression testing device as claimed in Claim 3, further **characterized in that** said sleeve body (61) has a front ring portion (67) and a rear ring portion (68) disposed behind and connected removably to said front ring portion (67) and having interengaging surfaces, said interengaging surfaces being configured as convex-and-concave structures that are complementary to each other, said rear ring portion (68) having a surrounding wall (681), a rear end wall (682), and an annular flange (602) extending from said rear end wall (682) into said accommodating space (610) and adapted for positioning the specimen unit (B) in said accommodating space (610), said first passages (80) being formed in said front and rear ring portions (67. 68), said positioning stubs (62) being formed on and disposed behind said rear end wall (682), said front ring portion (67) having a surrounding wall (671), a plurality of projections (672) extending radially and inwardly from said surrounding wall (681) of said rear ring portion (68), and an inner ring (673) connected integrally to said projections (672) and spaced apart from said surrounding wall (671) of said front ring portion (67), such that any two adjacent ones of said projections (672) cooperate with said surrounding wall (671) of said front ring portion (67) and said inner ring (673) to define a liquid passable space (674) thereamong, said inner ring (673) adapted to permit the specimen unit (B) to extend therethrough.

8. The compression testing device as claimed in Claim 3, further **characterized in that** said sleeve body (61) has a base portion (60), said base portion (60) having a base wall (601), and an annular flange (602) extending forwardly from said base wall (601) and adapted for positioning the specimen unit (B) relative to said outer housing (5), said positioning stubs (62) being formed on said base wall (601).

9. The compression testing device as claimed in Claim 3, further **characterized in that** said liquid supplying mechanism (7) further includes a plurality of connecting tubes (74) extending respectively through said openings (71) in said outer housing (5).
